Europäisches Patentamt

European Patent Office

Office européen des brevets

(11) Publication number : **0 540 018 A2**

(12) # EUROPEAN PATENT APPLICATION

(21) Application number : 92118603.7

(22) Date of filing : 30.10.92

(51) Int. Cl.⁵ : **G01N 21/00,** G06F 15/70,
G01B 11/24

(30) Priority : **01.11.91 JP 286934/91**

(43) Date of publication of application :
**05.05.93 Bulletin 93/18**

(84) Designated Contracting States :
**DE FR GB**

(71) Applicant : **FUJI ELECTRIC CO., LTD.**
**1-1, Tanabeshinden Kawasaki-ku**
**Kawasaki-shi Kanagawa 210 (JP)**

(72) Inventor : **Toyama,Kouichi**
**c/o Fuji Electr.Co.,1-1**
**Tanabeshinden,Kawasaki-ku**
**Kawasaki-shi, Kanagawa 210 (JP)**

(74) Representative : **DIEHL GLAESER HILTL &**
**PARTNER**
**Patentanwälte Königstrasse 28**
**W-2000 Hamburg 50 (DE)**

(54) **A cylindrical container inner surface tester based on an image processing technology.**

(57)   The present invention is a cylindrical container inner surface tester for detecting based on an image processing technology foreign substances, dust, scratches, etc. on the inner side surfaces of cylindrical containers such as aluminum cans. The present invention aims at solving the problem pertaining to the conventional technologies of differentiating the continuous tone of an image to detect white or black spots on the containers' inner surfaces. In the conventional technologies, a circular highlighted portion appears on an image and the intensity variations in the background are so complicated that defects cannot be easily detected. The cylindrical container inner surface tester of the present invention sets a threshold THD among the target picture element value PO $(i,j)$ of a continuous tone image and the background picture element values PO $(i+\alpha,j)$ and PO $(i-\alpha,j)$ of the continuous tone image $\alpha$ picture elements forward and backward respectively along a scanning line of the continuous tone image of the inner surface of a test can viewed from its axis direction. The tester detects defects by determining that the target picture element indicates a defective valley when the following equations exist, and determining that the target picture element indicate a defective peak when the signs are inverted in the equations.

$$PO (i+\alpha,j) - PO (i,j) > THD$$
$$PO (i-\alpha,j) - PO (i,j) > THD$$

Before detecting defects, the present invention extracts as a test area according to the continuous tone image signal 1a the diagonal-shaded area between the first rise point 61 and the last fall point 62 (or between 61 and 63, and 64 and 62 excluding a masked area 201) of a signal obtained by converting a multi-value continuous tone image signal 1a to a binary representation using the predetermined threshold THG. Furthermore, the continuous tone image of the test container's inner side surface is sequentially scanned along a ring or spiral circular scanning line Lk or Lk', for example. An absolute value of the difference $\Delta P = \|P0 - P1\|$ between the volue P0 of the target picture element on the circular scanning line and the value P1 of the background picture element separate from the target picture element by a predetermined interval of picture elements is compared with a predetermined threshold THP corresponding to the position of the circular scanning line. If $\Delta P > THP$, the target picture element indicates a defective inner surface such as a defective concave, etc. The cylindrical container inner surface tester is used for testing the inner surfaces of cylindrical containers such as beer cans while they are conveyed on a belt conveyor, etc.

EP 0 540 018 A2

Fig. 7

## Background of the Invention

### Field of the Invention

The present invention relates to a cylindrical container inner surface tester, and specifically to a cylindrical container inner surface tester based on an image processing technology for detecting defective concave foreign substances, dust, scratches, etc. on the inner surfaces of cylindrical containers such as beer cans while being carried by a conveyer.

### Description of the Related Art

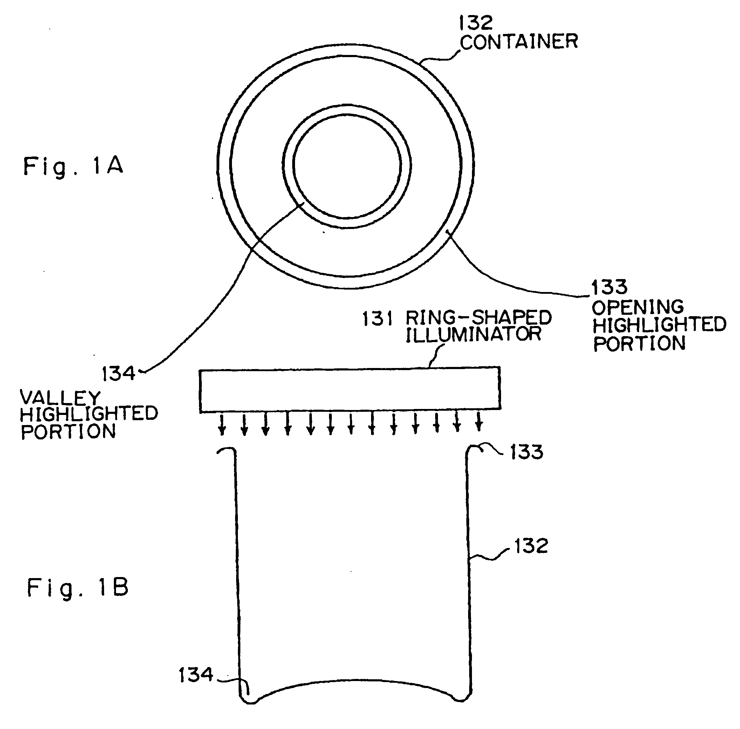

Figure 1 is a view for explaining a highlighted portion of a sample aluminum beer can when observed from above. Figure 1A is a top view (image) of the container (can); and Figure 1B is its sectional view. 132 is a container; 131 is a ring-shaped illuminator for illuminating the container 132 from above; 133 is a highlighted portion at the opening of the container; and 134 is a highlighted portion of its valley. Thus, the portions 133 and 134 are highlighted at the opening and the valley of the container. They are specifically highlighted if the container has metallic raster inside.

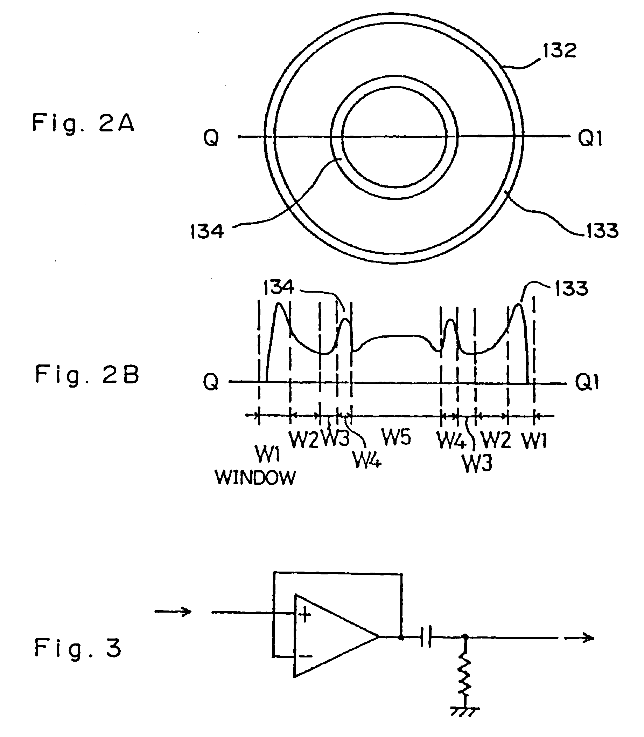

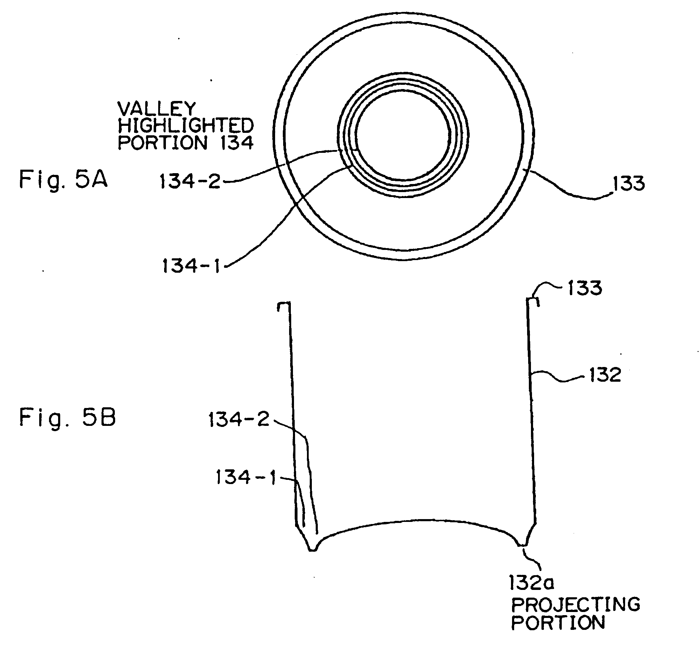

Figure 2B shows intensity variations of the top view of the container 132 (Figure 2A) along the scanning line Q - Q1 . The intensity variations can be classified into 5 level areas from W1 to W5. First area W1 refers to the opening highlighted portion 133; second area W2 refers to the internal upper middle part of the container indicating conparatively high intensity; third area W3 refers to the internal lower middle part of the container subject to less amount of light of the illuminator 131 shown in Figure 5 indicating intensity lower than other portions of the container; fourth area W4 refers to the highlighted portion of the valley 134; and fifth area W5 refers to the inner valley of the container.

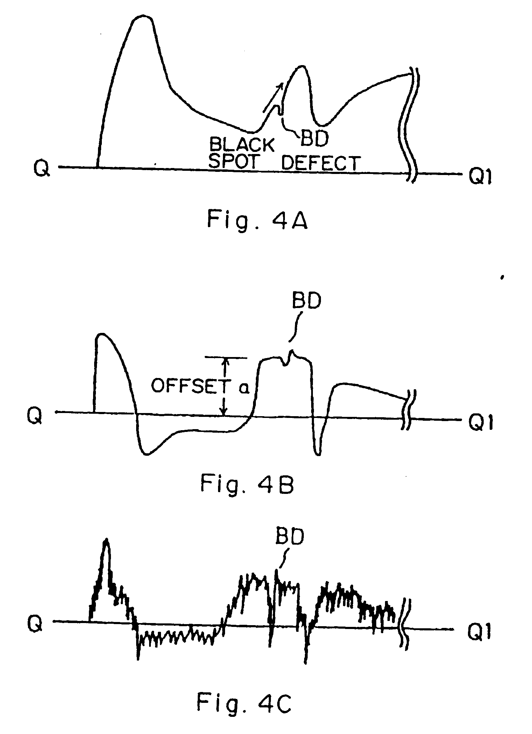

Conventionally, these areas W1 - W5 are provided with a window individually and assigned thresholds used for detecting defects such as black spots (black points) and white spots (white points) according to the optical characteristics of each area. One method of detecting a defect is, for example, to convert by a predetermined threshold a multi-value continuous tone image signal of 8 bits, etc. to a binary value. The signal in obtained by A/D-converting an analog video signal (analog continuous tone image signal) obtained by scanning a target image. Another method is a differentiation method in which the above described video signal is differentiated through a differentiation circuit as shown in Figure 3 to extract a defect signal. In the differentiation method, a differentiation signal can be obtained for the contour of a test object. While either of a positive pulse or a negative pulse is generated by the differentiation along the contour of a test object, these pulses are generated simultaneously at a fine defective point, thereby extracting a defect.

That is, where a value $P(i,j)$ indicates a target point (coordinates $x=i$ and $y=j$) referred to a signal $P(x,y)$ obtained by differentiating an analog continuous tone image signal generated by a raster scanning operation, a value $PD(i,j)$ indicates a binary function value for detecting a defect on the target point, and values $P(i-\alpha,j)$ and $P(i+\beta,j)$ indicate the points, one of the points being positioned $\alpha$ picture elements forward and another of the points being positioned $\beta$ picture elements backward from the above described point $P(i,j)$ in the x direction of the scanning line, if the following equations exist between the value $P(i,j)$ and values $P(i-\alpha,j)$ and $P(i+\beta,j)$.

$$P(i,j) - P(i - \alpha,j) > TH1$$

and

$$P(i + \beta,j) - P(i,j) > TH1$$

where TH1 indicates a predetermined threshold (positive value), then, $PD(i,j)=1$ is created, where the target point indicates an abnormal black point and, if not exist, then $PD(i,j)=0$ is created, where the target point indicates a normal point.

Figures 4A, 4B, and 4C are views for explaining the problem in the conventional defect detecting method based on the differentiation method. Figure 4A shows an example of intensity variations (analog continuous tone image signal) along the scanning line Q-Q1; Figure 4B shows an example of an analog differentiation of the signal shown in Figure 4A; and Figure 4C shows an example of a digital differentiation of the signal shown in Figure 4A. The portions indicated by BDs shown in Figures 4A - 4C refer to black spots. And there are problems in the conventional defect detecting method in which a black level defect BD is extracted by the portion of the signal containing intensity variations as shown in Figure 4A. That is, in the analog differentiation method, a differentiation signal indicating a small defective point is superposed on the basic intensity differentiation signal according to a time constant of a filter circuit as shown in Figure 4B. In the digital differentiation method, the signal indicates unstable values as shown in Figure 4C, and a differentiation signal indicating a defective point is embedded in noise components. Therefore it in very difficult to detect a defect signal according to a predetermined threshold.

On the other hand, a sample top view of a container 132 having a projecting portion 132a shown in Figure 5, which often generates highlighted portions 134-1, 134-2, etc. in series according to the form of the container's valley or the variations in the reflection of a light of the side of the container. Specifically, most metallic containers have a mirror like inner surface and cause the above described problems.

Such highlighted portions can be only by using an appropriate illumination. Therefore, the conventional defect detecting method has, in vain, to try to overcome the problem of the above described uneven illumination generated as a highlighted portion inside a test container in testing its inner surface.

The above described method has also difficulty in detecting a local contrast when there is dust on the surface of a tested can.

Summary of the Invention

An object of the present invention in to provide a cylindrical container inner surface tester for detecting a defective portion stably and precisely even though there is uneven illumination inside a test container.

To attain the above described object, the cylindrical container inner surface tester illuminates from above in the axis direction of a container the inner surface of an axis-symmetrical cylindrical container. A TV camera captures the illuminated area of the cylindrical container from above in the axis direction. Then, the captured image is analyzed to determine a black or white spot inside the cylindrical container.

The tester comprises a frame memory (1) for storing as the data for the above described captured image a multi-value continuous tone image signal (PO) D/A-converted from a continuous tone image signal obtained by scanning the captured image, and an area detecting unit (an area detecting circuit 21, etc.) for generating a binary image signal by binary-converting using a predetermined threshold (THG) a multi-value continuous tone image signal (1a, etc.) read by horizontally or vertically scanning the frame memory and for determining as a test area the area between the first rise point (61) and the last fall point (62) of each scanning line of the binary image signal.

An area having a different optical characteristic in the area-to-be-tested detected by the area detecting unit is masked by a masking unit (a window gate circuit 5E, etc.) with predetermined mask pattern data (2a) containing, for example, a mask rise point 63, a mask fall point 64, etc.

Based on the above described configuration, a target picture element value and two background picture element values are extracted. The target picture element value (coordinates x=i and y=j) at a target point PO(i,j) are associated with a multi-value continuous tone image signal PO(x,y) based on the raster scanning operation. The background picture element values of two background points PO(i+$\alpha$,j) and PO(i-$\alpha$,j) indicate the values of the points respectively positioned $\alpha$ picture elements forward and backward from the above described point PO(i,j) in the x direction of the scanning line are extracted. Then, the intensity relationship, where the relationship among these three points indicates a valley when detected as a black level while it indicates a peak when detected as a white level is detected (that is, the difference in intensity between a background picture element value and a target picture element value is detected). The target picture element value PO(i,j) is determined to be a picture element indicating a defect when the absolute value of the difference in the intensity exceeds a predetermined threshold THD.

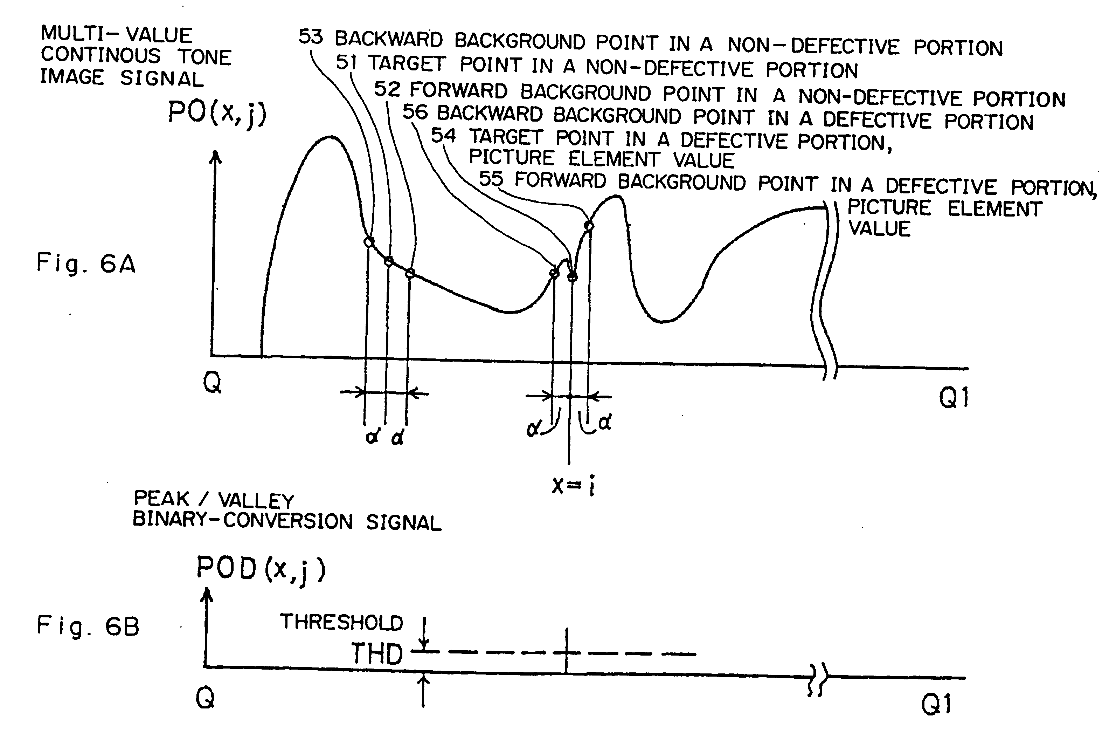

Figures 6A and 6B show the principle of the valley-detection and binary-conversion method which is the most important point in the present invention. Figure 6A shows an example of a multi-value continuous tone image signal PO(x,y) in the scanning line Q-Q'1 (y=j), and Figure 6B shows the peak/valley multi-value continuous tone image signal POD(x,j) as an output indicating a defect as compared with Figure 6A.

The multi-value continuous tone image signal PO is read by scanning the frame memory, and extracted as a fixed binary conversion signal, corresponding to the signal PO, for a test area between the first rise point detected in each scanning operation on the frame memory and the last fall point.

In Figure 6A, 51 is a target point in a non-defective portion; and 52 and 53 are forward background point and backward background point of a non-defective portion respectively positioned $\alpha$ picture elements forward and backward from the target point 51 in the scanning line.

Likewise, 54 is a target point in a defective portion; and 55 and 56 are a forward background point and a backward background point of a non-defective portion respectively positioned $\alpha$ picture elements forward and backward from the target point 51 in the scanning line.

If the following conditions indicated by equations exist where the coordinates (i,j) (that is, x=i and y=j) indicates a target point, POD(i,j) indicates a binary function value (referred to as a binary defective peak/valley image signal) for detecting a defect on a target point,

$$PO(i - \alpha,j) - PO(i,j) > THD \quad (1)$$
and
$$PO(i + \alpha,j) - PO(i,j) > THD \quad (2)$$

where THD indicates a predetermined threshold (positive value), then, POD(i,j) = 1 is created, where the target point in determined to be a valley (defect).

The non-defective portion shown in Figure 6A does not satisfy the above described condition indicated by equation (2), and no defects are detected. However, conditions indicated by equations (1) and (2) exist in the defective portion shown in Figure 6A and a valley defect in detected.

Thus, an optimum detecting performance can be realized by dividing the waveform shown in Figure 6A into a plurality of small areas and appropriately assigning to each of the small areas a threshold THD and the number $\alpha$ of picture elements indicated in equation (1) and (2) above.

In the present invention in case a peak (defect) is detected, the target point is determined to be a defective peak, creating the peak/valley binary image signal POD(i,j)=1 under existing the following equations where the exchanged with the other in each of the above described equations (1) and (2) is position of the difference,

$$PO(i,j) - PO(i - \alpha,j) > THD \quad (1A)$$
and
$$PO(i,j) - PO(i + \alpha,j) > THD \quad (2A)$$

Next, the cylindrical container inner surface tester illuminates from above in the axis direction of a container the inner surface of an axis-symmetrical cylindrical container (132, etc.) using a ring-shaped illuminator 131, etc.. A TV camera captures the illuminated area of the cylindrical container from above in the axis direction. Then, the captured image is analyzed to determine a defective concave, dust, etc. inside the cylindrical container. The image of the inner surface of the cylindrical container is scanned along a ring or spiral scanning line (L, etc., hereinafter referred to as a circular scanning line) which is centered on the center of the image and varies in radius sequentially, the radius changing for each cycle of one or more picture elements predetermined. Then, the absolute value (ΔP, etc.) indicating the difference between the intensity of the target picture elements (P0, etc.) among a plurality of picture elements arranged at intervals such that one or more picture elements are arranged between two target picture elements and the intensity of background picture element (P1, etc.) located a predetermined number (d, etc.) of picture elements forward or backward of the target picture element is compared with a threshold (THP, etc.) predetermined according to the position of the circular scanning line. The above described processes are repeated for each target picture element, and, after the above process, a determining unit (a defect detecting circuit 9, etc.) determines a defective container's inner surface when the absolute value larger than the threshold.

The above mentioned threshold must be set per circle of the circular scanning line (through a scanning line counter 102, a threshold value table 107, etc.).

The intensity of the background picture element refers to an average intensity value (obtained by an averaging circuit 1-6) among the picture elements in a predetermined one- or two-dimensional local area centered on the background picture element.

Based on the above-mentioned structure, the cylindrical container inner surface tester illuminates from above in the axis direction of a container the inner surface of an axis-symmetrical cylindrical container (132, etc.) using a ring-shaped illuminator 131, etc. When a TV camera captures the illuminated area of the cylindrical container from above in the axis direction and the captured image is analyzed, the distribution of the continuous tone on the container's inner surface is concentrically generated as shown in Figure 3A. Taking this into account, a picture element string is obtained by scanning the container's inner surface along the ring or spiral circular scanning line. When a defective concave exists, it appears as a continuous tone in the scanned picture element string. Thus, the absolute value ΔP indicating the difference between the intensity P0 of the target picture elements in a scanned picture element string and the intensity P1 of the background picture element d picture elements forward or backward of the target picture element is calculated by the following equation.

$$\Delta P = \| P0 - P1 \|$$

A threshold THP is assigned to each of the windows W1 through W5, and the threshold THP in compared with the absolute value ΔP indicating the difference between the intensity values. If ΔP is larger than the THP, the target picture element is determined to be a picture element of a defective inner surface portion such as a concave, etc.

However, the threshold THP can be set per circle of the circular scanning line, for example, according to circle's radius. The intensity P1 of the background picture element can be an average intensity value among picture elements in a one-dimensional local area (that is, a series of n picture elements on the scanning line) or a two-dimensional local area (that is, a local area comprising n picture elements by n picture elements.

As described above, the present Invention correctly extracts a test area and exactly detects a defective portion such as defective concave, foreign substances, dust, scratches, etc., even though a cylindrical container's inner surface indicates an uneven illumination due to a highlighted portion, etc. caused by an illuminator.

Brief Description of the Drawings

One skilled in the art can easily understand additional features and objects of thin invention from the description of the preferred embodiments and some of the attached drawings. In the drawings:

Figure 1 shows the highlighted portion inside a container;

Figures 2A and 2B show relative the intensity variations secured from the conventional division of a window inside a cylindrical container;

Figure 3 shows an example of an analog differentiation circuit;

Figures 4A, 4B, and 4C show the conventional method of detecting a defect;

Figures 5A and 5B show the highlighted portion inside a container having an unusual valley shape;

Figures 6A and 6B show the principle of the method of detecting a valley and performing a binary conversion;

Figure 7 is a block diagram for explaining the hardware configuration as an embodiment of the present invention;

Figures 8A, 8B, and 8C are views for explaining the operation of the area detecting circuit;

Figure 9 is a block diagram for explaining in detail the configuration of the peak/valley detecting circuit as an embodiment of the present invention;

Figures 10A, 10B, and 10C show the first embodiment of the screen scanning method of the present invention;

Figure 11 shows the second embodiment of the screen scanning method of the present invention;

Figure 12 shows the third embodiment of the screen scanning method of the present invention;

Figures 13A, 13B, and 13C show the relationship between the defect detecting method of the present invention and the shape of a defective portion;

Figure 14 is a block diagram of the hardware configuration of an embodiment of the present invention;

Figure 15 shows a method of determining the process area for a container;

Figure 16 shows a method of detecting the error in the position of a container;

Figure 17 shows a method of generating a circular address in the present invention;

Figure 18 shows an example of an image of a container having a concave portion;

Figure 19 shows an embodiment of the intensity variations on a scanning line, and shows the principle of the defect detecting circuit based on the circular method shown in Figure 14;

Figure 20 shows another embodiment of the intensity variations on the scanning line, and shows the principle of the defect detecting circuit based on the circular method shown in Figure 14;

Figure 21 shows an embodiment of the configuration of the circular address generator and the defect detecting circuit based on the circular method shown in Figure 14;

Figure 22 shows an embodiment of the circuit for applying a moving average to the background picture element values shown in Figure 21;

Figure 23 is a block diagram of an embodiment of the configuration in which circular addresses shown in Figure 14 is generated by software; and

Figure 24 is an embodiment of the process by the CPU shown in Figure 23.

Description of the Preferred Embodiments

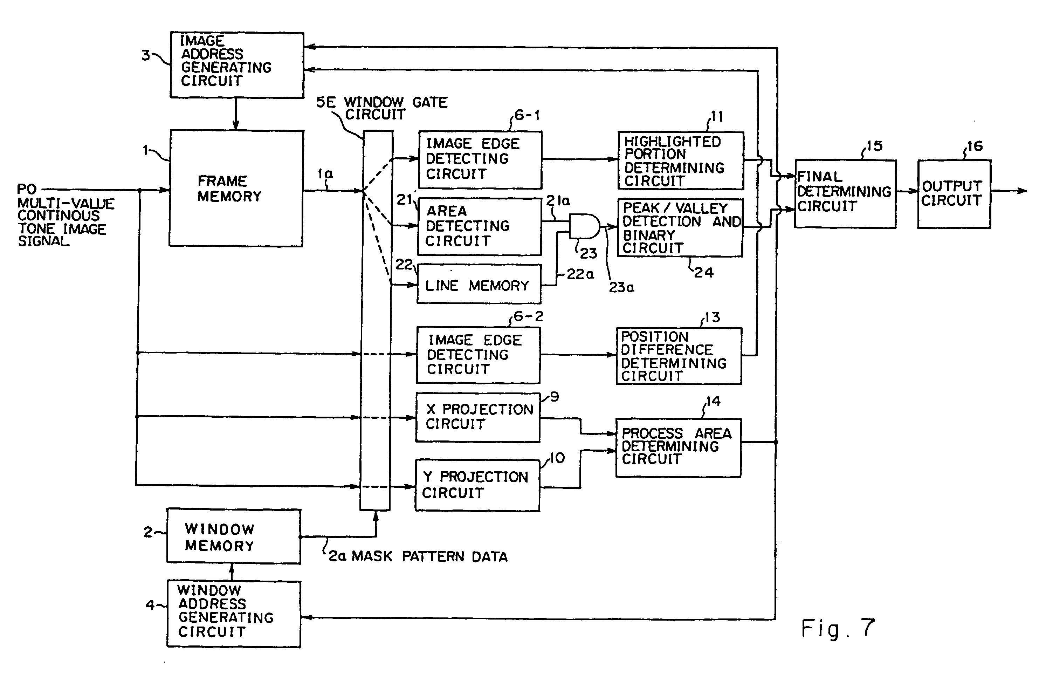

The first embodiment of the present invention is described below by referring to Figures 6 through 13. Figure 7 is a block diagram of a hardware as the first embodiment of the present invention. In Figure 7, a multi-value (8 bits, for example) continuous tone image signal PO is obtained by AD-converting the video signal provided by raster-scanning performed on an image captured by TV camera not shown in Figure 7. A frame memory 1 receives a multi-value continuous tone image signal PO to store as multi-value image data; an address generating circuit 3 is provided for the frame memory; a window memory 2 stores a mask pattern for each window; an address circuit 4 is provided for the window memory; a window gate 5E masks with mask pattern data 2a obtained from the window memory 2 a multi-value continuous tone image signal PO or an image signal 1a read from the frame memory 1, and passes only the image signal PO or the image signal 1a for the specified window area.

Image edge detecting circuits 6-1 and 6-2 detect the edges of an image, that is, the outer edge (the point in the outer circumference) and the inner edge (the point in the inner circumference) of a ring-shaped highlighted portion. In this case, an inputted image signal is converted to a binary representation using a predetermined threshold used for detecting the position of a target image or performing a circularity test. Then, the image edge detecting circuit 6-1 and 6-2 store the coordinates of the rise point and the fall point of the binary signals as the coordinates of the image edge in their own memories. A circuit 11 performs the circularity test on the coordinates of the points in the outer and inner circumferences detected by the image edge detecting circuit 6-1.

A circuit 13 detects the difference between the center position of an actual target image, detected by the image edge detecting circuit 6-2 by applying the latest multi-value continuous tone image signal PO, end the central position of a predetermined window.

An area detecting circuit 21 receives a multi-value continuous tone signal 1a from the frame memory 1 through the window gate circuit 5E, and outputs an area signal 21a as a signal for specifying an area to be scanned (that is, an area within the contour of a test container) for a defect on each of horizontal scanning lines for the purpose of detecting a defective image.

A line memory 22 receives an image signal 1a for each of the horizontal scanning lines synchronized to the area detecting circuit 21a, and temporarily stores it.

An AND gate 23 ANDs an area signal 21a and a continuous tone image signal 22a outputted by the line memory 22 an an image signal for each of the horizontal scanning lines corresponding to an area signal 21a, and outputs a continuous tone image signal 23a for an area to be searched for a defect (referred to as a test area continuous tone image signal).

A peak/valley binary-conversion circuit 24 detects from the image signal 23a a picture element indicating a defect including a defective peak/valley described by referring to Figure 6.

An X projection circuit 9 obtains an X-direction projection pattern of a target image using a nulti-value image signal PO which has passed through the window gate circuit 5E. Likewise, a Y projection circuit 10 obtains a Y-direction projection pattern of a target image. A process area determining circuit 14 determines using these output data of the projection circuits 9 and 10 the area of a test container image not adjacent to other container images.

A final determining circuit 15 receives a determination result from the peak/valley binary-conversion circuit 24 to perform a final determination of the acceptability of the container; and an output circuit 16 outputs the determination signal outputted by the final determining circuit 15.

In the present invention, the area detecting circuit 21 detects the contour of a container as a test area, and the area is searched for a defect according to the ready described equations (1), (2), (1A), and (2A) which refer to Figures 6A and 6B.

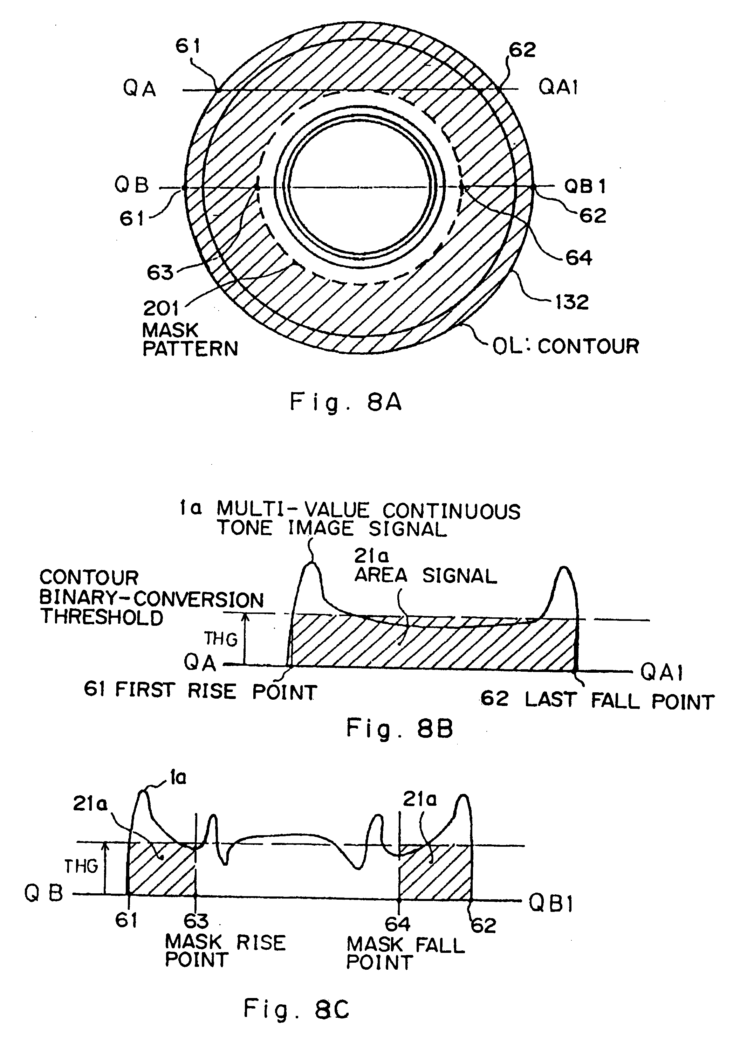

Figure 8A through 8C show the operation of the above described area detecting circuit 21, that is, the operation for detecting the test area (namely, the contour of a container). That is, Figure 8A is a top view of the container 132, where OL shows the contour, the linen QA-QA1 and QB-QB1 show scanning lines (or sections), and 201 is a mask pattern. Figure 8B indicates the relationship between the intensity variations (continuous tone image signal) along the section QA - QA1 and the area to be tested. Figure 8C shows the relationship between the intensity variations (continuous tone image signal) along the section QB - OB1 and the test area.

An described above, the area detecting circuit 21 receives a multi-value continuous tone image signal 1a from the frame memory 1 through the window gate circuit 5E, and converts it to a binary number using a threshold THG (referred to an a binary contour threshold for convenience) as shown in Figure 8B. Then, the first rise point 61 and the last fall point 62 of the binary signal are detected, and the range between the these points is defined as the process range.

A signal indicating the process range, that is, the signal indicating "1" for the diagonal-shaded portion shown in Figure 8B is outputted as the area signal 21a. The area signal 21a and the continuous tone signal 22a for 1 scanning line temporarily stored by the line memory 22 corresponding to the area signal 21a are ANDed through the AND gate 23 for outputting the above described continuous tone signal 23a for the test area.

Alternatively, the area signal 21a can be obtained from the window signal obtained from the mask pattern data 2a from the window memory 2 (that is, a signal indicating the area excluding the mask pattern area), or as a combination of the area signal 21a and the window signal.

The area between the points 63 and 64 shown in Figure 8C corresponds to the area of the mask pattern 201 shown in Figure 8A, where 63 is a mask rise point, and 64 is a mask fall point. In this example, the mask pattern 201 masks the area in which the variation of the continuous tone image signal 1a of the container valley is anticipated to be somewhat complicated.

In this case, the window signal can be obtained as "1" in the area excluding the area between the points 63 and 64 in the mask area. The signal obtained by combining the original area signal indicating "1" only between the first rise point 61 and the last fall point and the window signal, that is, the signal indicating "1" only in the diagonal-shaded portion between the points 61 and 63 and between the points 64 and 62 shown in Figure 8C is the area signal 21a finally outputted from the area detecting circuit 21.

The test area indicated by diagonal-shaded portion as shown in Figure 8C can be assigned the optimum number α of picture elements and the threshold THD in equations (1), (2), (1A), and (2A) shown in Figures 6A and 6B.

Thus, the optimum number α of picture elements according to the optical characteristics of the inner surface of a container and the threshold THD are selected by concentrically creating a number of the mask patterns 201 or window patterns, thereby improving the efficiency in detection.

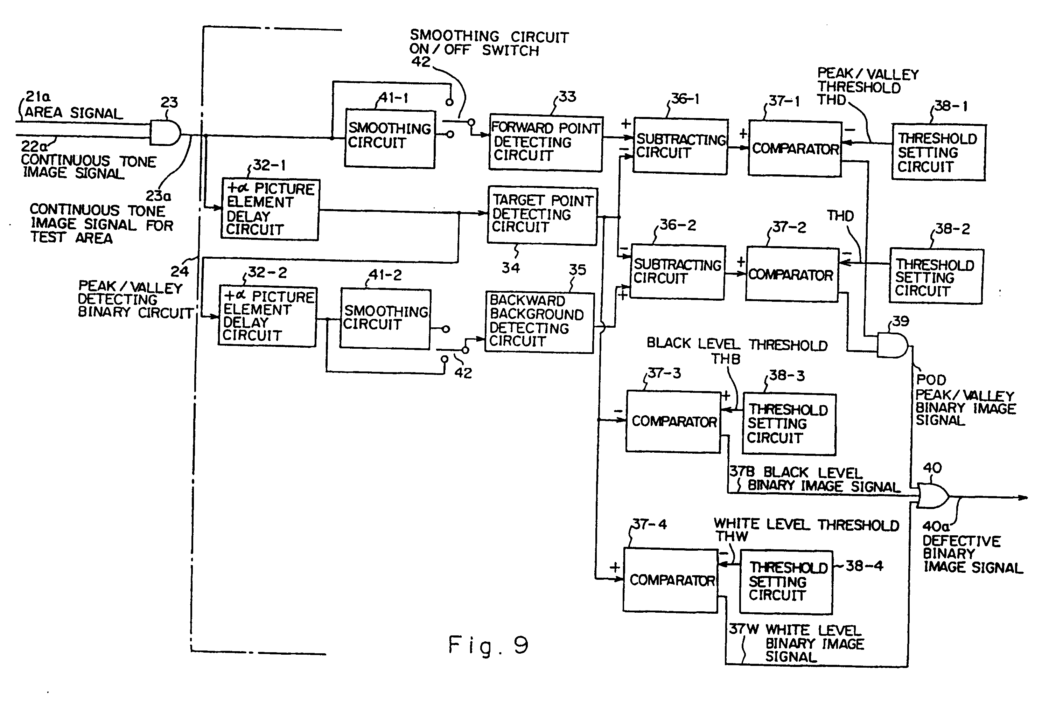

Figure 9 is a block diagram of the detailed configuration of the peak/valley binary-conversion circuit 24 shown in Figure 7. However, with this configuration, only a valley (defect) is detected. In the case of a peak (defect) detection, the subtraction of subtraction circuits 36-1 and 36-2 is inverted, or an input image signal 23a applied to the peak/valley binary-conversion circuit 24 is inverted. In the case of a peak (defect) detection, the function of comparator 37-3 (black level determination by a fixed binary conversion) and that of comparator 37-4 (white level determination by a fixed binary conversion) are exchanged with each other.

The function of the peak/valley binary-conversion circuit 24 shown in Figure 9 is explained below. The circuit 24 shown in Figure 9 shows how the principle shown in Figures 6A and 6B is realized. In Figure 9, +α picture element delay circuits 32-1 end 32-2 sequentially delay an input image signal 23a (that is, a test area continuous tone image signal outputted by the AND gate 23 shown in Figure 7) by α picture elements in the scanning direction.

Smoothing circuits 41-1 and 41-2 smooth an image signal if necessary to reduce the influence of noise; and a smoothing circuit ON/OFF switch 42 switches ON or OFF the smoothing function.

The smoothing circuit 41-1 is provided corresponding to the forward background point detecting circuit 33, and likewise, the smoothing circuit 41-2 is provided corresponding to the backward background point detecting circuit 35. For the purpose of improving the sensitivity in detecting a defect in a target point (that is, improving the function of detecting a picture image indicating a defect by a snall peak/valley or small intensity variations, namely, by a small threshold value), the smoothing circuit is not provided for the target point detecting circuit 34 described later.

A forward background detecting circuit 33 receives as an original input image signal a test area continuous tone image signal 23a or a smoothed signal for it to detect a forward background point. A target point detecting circuit 34 receives an output image signal of the $+\alpha$ picture element delay circuit 32-1 to detect a target point. A backward background detecting circuit 35 receives an image signal outputted by the $+\alpha$ picture element delay circuit 32-2 or a smoothed signal for it to detect a backward background point. Each of the detecting circuits 33, 34, and 35 simultaneously latches the picture element values $PO(i+\alpha,j)$, $PO(i,j)$, and $PO(i-\alpha,j)$ described by referring to Figures 6A and 6B if the smoothing circuit 41-1 and 41-2 are omitted (that is, the smoothing circuits are short-circuited by the switch 42) when the delay circuits 32-1 and 32-2 are used.

When the smoothing circuits 41-1 and 41-2 are used, the above described picture element values $PO(i+\alpha,j)$ and $PO(i-\alpha,j)$ are replaced with the results of the following equations (3) and (4) respectively.

$$PO(i + \alpha,j) = \{_{k = 0}\Sigma^{n - 1}PO(i + \alpha + k,j)\}/n \quad (3)$$
$$PO(i - \alpha,j) = \{_{k = 0}\Sigma^{n - 1}PO(i - \alpha - k,j)\}/n \quad (4)$$

That is, the smoothing circuit 41-1 replaces the picture element value of the forward background point with an average value of n forward picture element values including the picture element value $PO(i+\alpha,j)$ of the forward background point and those of the points beyond it. Likewise, the smoothing circuit 41-2 replaces the picture element value of the backward background point with an average value of n backward picture element values including the picture element value $PO(i-\alpha,j)$ of the backward background point and those of the points beyond it.

The average values are not calculated with the background point set as a median to prevent the picture element value $PO(i,j)$ of a target point from being involved in calculating the average values.

An average value obtained by the equation (3) or (4) can alternatively be replaced with the median of n picture element values (that is, the value at the middle point when n values are arranged in order).

Each piece of the above described image data latched by the detecting circuits 33, 34, and 35 shown in Figure 9 is applied to the subtracting circuits 36-1 and 36-2 and the difference is calculated according to the equations (1) and (2) shown in Figures 6A and 6B. The difference is compared by comparators 37-1 and 37-2 with a peak/valley value THD each being predetermined by threshold setting circuits 38-1 and 38-2. Thus, a peak/valley binary image signal POD shown in Figures 6A and 6B (a defective valley in this case) can be obtained as an output from the AND gate 39 which ANDs the comparators 37-1 and 37-2.

The comparators 37-3 and 37-4 detect a picture element indicating a defect in a relatively large area. The comparator 37-3 receives image data of a target picture element outputted by the target point detecting circuit 34 which does not receive a smoothed image signal. Then, it compares the received data with a black level threshold THB determined by the threshold setting circuit 38-3, and detects and outputs a black level binary image signal 37B indicating a picture element of a black level defect.

Likewise, the comparator 37-4 receives data of a target picture element, compares it with a white level threshold THW determined by a threshold setting circuit 38-4, and detects and outputs a white level binary image signal 37W indicating a picture element of a white level defect.

An OR gate 40 ORs the signals thus detected as picture-element-indicating-a-defect detection signals including a peak/valley binary image signal POD, a black level binary image signal 37B, and a white level binary image signal 37W, and outputs a defective binary image signal 40a.

A picture-element-indicating-a-black-level-defect detector (the comparator 37-3, etc.) and a picture-element-indicating-a-white-level-defect detector (the comparator 37-4, etc.) operate concurrently with the peak/valley detector/binary-converter (the AND gate 39, etc.) in the example shown in Figure 9. These units separately test an image, and the results are finally put together and outputted as a final determination.

Next, an image scanning method is explained below. Figure 6A shows a continuous tone image at a section Q-Q1. In equations (1), (2), (1A), and (2A), $\alpha$ indicates the number of picture elements, and is a paraneter indicating the frequency of an image signal at a defective portion (that is, the width of a peak or a valley). However, as shown in Figure 6A, continuous tone image signals for the inner surface of a nondefective container complexly comprise various frequency components. Therefore, the inner surface of a container must be divided if necessary and each of them must be assigned an optimum parameter.

However, the intensity variations in a background picture element can be simplified by appropriately determining the scanning direction of the image, thereby improving the detection precision.

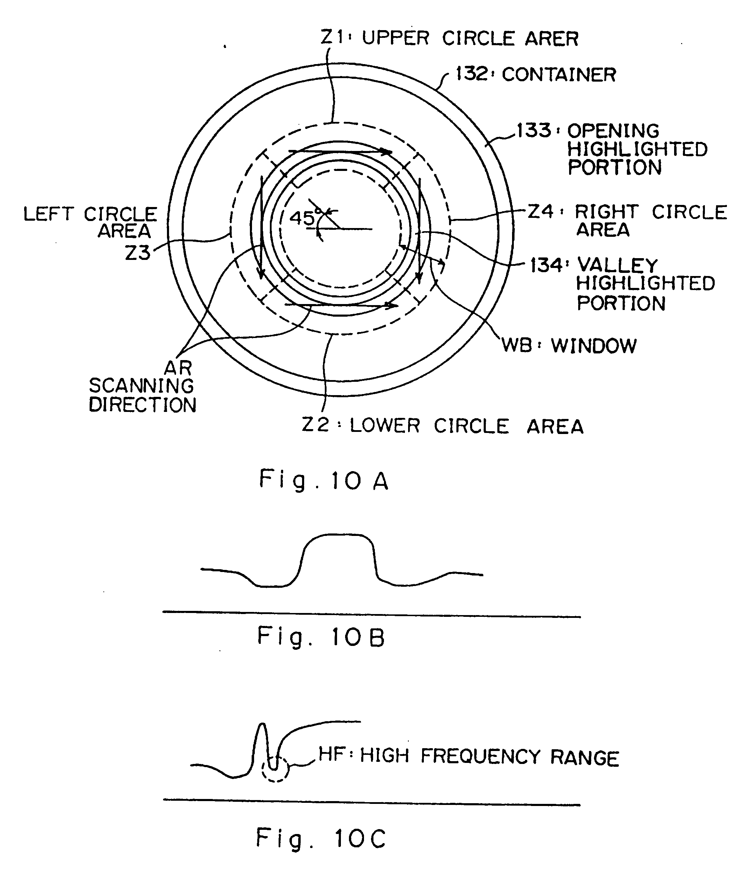

Figures 10A, 10B, and 10C are views for explaining an embodiment of an image scanning method, where a window WB is divided into the following four areas each being selected as a target area to be searched for a defect; Z1, Z2, Z3, and Z4 are respectively the upper circle area, lower circle area, left circle area, and right circle area. That is, in Figure 10A, the valley highlighted portion 134 having complicated intensity variations in the container 102 is selected through the window WB and peaks are detected and binary-converted. If the intensity variations are checked horizontally, for example, in the left circle area Z3 of the window WB, the intensity variations occur at a high frequency in portions such as "HF" shown in Figure 10C, thereby affecting the detection sensitivity. However, if the left circle area Z3 of Figure 10A is scanned in the direction indicated by the arrow AR, intensity variations can be obtained at a low frequency as the background as shown in Figure 10B, while the defective portions are detected at a sufficiently high frequency, thereby improving the detection precision.

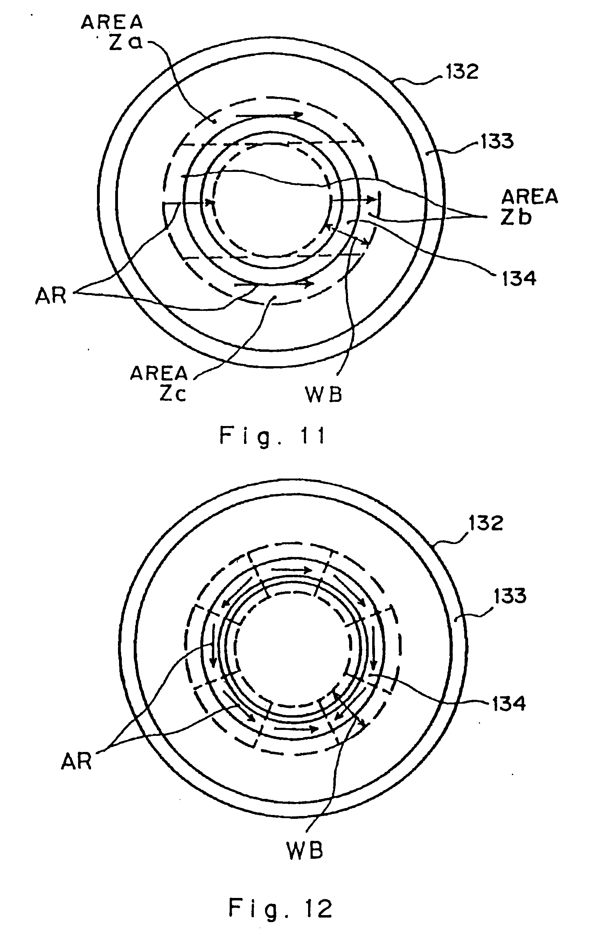

Figure 11 is a view for explaining an embodiment of a simple picture scanning method. In Figure 11, an image is scanned horizontally as indicated by the arrow AR, and the window WB is divided into three areas Za, Zb, and Zc. In this case, a threshold for detecting a peak/valley in the areas Za and Zc and a threshold for detecting a peak/valley in the area Zb are determined separately to perform an optimum detection according to the frequency of the background intensity variations.

In this case, the defect detection sensitivity is low in the area Zb. However, the detection sensitivity in the areas Za and Zc can be good.

Figure 12 shows a variation of the embodiment shown in Figure 10A. In Figure 10A, the scanning area is radially and equally divided into four fan-shaped areas. By contrast, in Figure 12, the area is equally divided into eight fan-shaped areas, and an optimum scanning direction AR is assigned respectively to each area, thereby improving the detection sensitivity much more than the case in Figure 10.

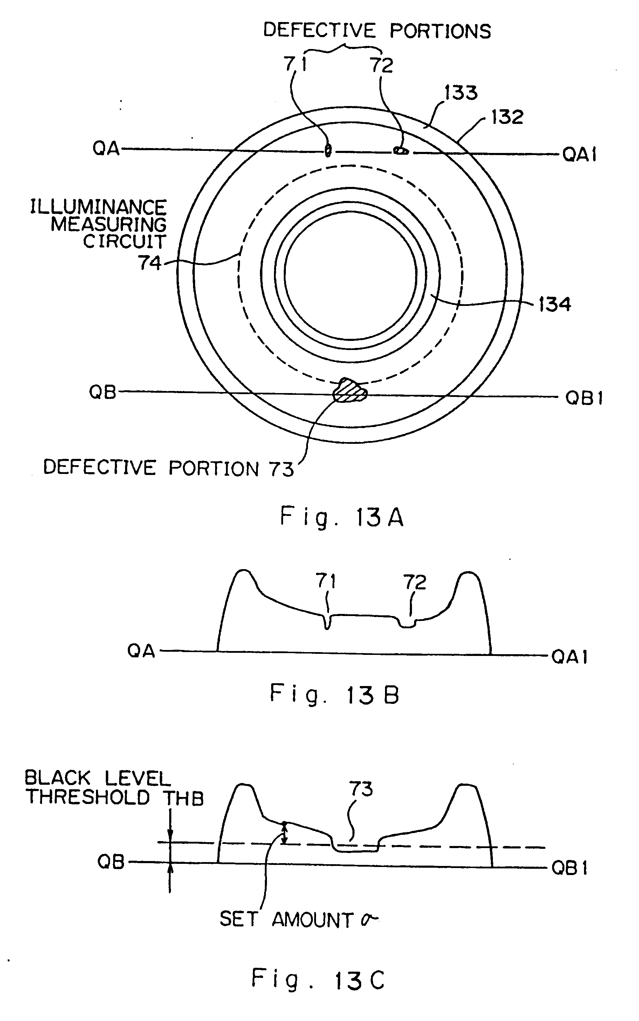

Figures 13A, 13B, and 13C are views for explaining the relationship between a defect detecting method based on the present invention and the shape of a defective portion. In Figure 13A, defective portions 71 - 73 are detected in the image of the container 132. Figure 13B shows the intensity variations along the scanning line QA - QA1 shown in Figure 13A. Defective oval portions 71 and 72 show different intensity variation frequencies depending on the direction of their longer diameter. Therefore, the defect detection sensitivity can be improved by increasing the amount corresponding to the number $\alpha$ of picture elements in equations (1) and (2) several times and repeating the check.

Figure 13C shows the intensity variations along the scanning line QB - QB1 shown in Figure 13A. A defective portion 73 in this section is relatively large, and the variation in the continuous image signal occurs at a low frequency but is sufficient in magnitude to detect a black spot in contrast with its background. Since the defective portion 73 must be detected at a low frequency, it cannot be successfully detected unless the number $\alpha$ of the above described picture elements is impractically large in the valley-detection and binary-conversion process. In such a case, using the fixed binary conversion method shown in Figure 9, a defective portion 73 is isolated and detected as a black level as shown in Figure 13C by setting a black level threshold THB by the threshold setting circuit 38-3 shown in Figure 9, thereby supplementing the detection sensitivity in the valley-detection and binary-conversion process.

A black-level threshold THB can be determined by, for example, obtaining an average value of picture element intensity data along a circular path (an illumination measurement circle) such as the circle 74 shown in Figure 13A, and subtracting a predetermined amount a from the average value as shown in Figure 13C.

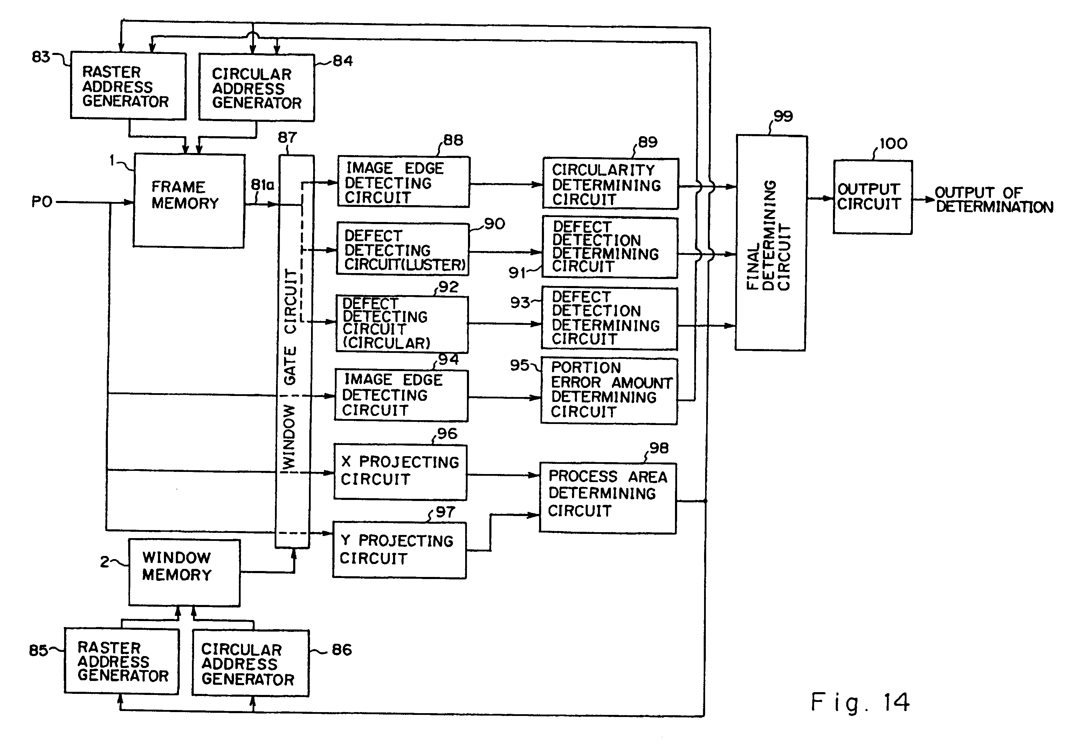

Next, Figure 14 is the block diagram of the hardware of the second embodiment of the present invention. In Figure 14, a continuous tone image signal PO consisting of 8 bits, for example, is obtained by A/D converting a video signal generated by raster-scanning the screen of a TV camera (not shown in Figure 14); a frame memory 1 receives the multi-value continuous tone image signal PO and stores it as multi-value screen data; a raster address generator 83 generates a raster address for the frame memory; a circular address generator 84 generates an address for the frame memory 1 to circularly scan an image at; a window memory 2 stores a ring mask pattern for each window as shown in Figure 2B; a raster address generator 85 generates a raster address for the window memory 2 in the same way as that performed by the generator 83; likewise a circular address generator 86 generates an address for the window memory 2 to circularly scan an image at. With this configuration, the generation of raster addresses and circular addresses can be switched by switching from the generators 83 and 85 to 84 and 86 or vice versa.

A window gate circuit 87 masks a multi-value continuous tone signal PO or an image signal 81a read from the frame memory 1 with the mask pattern data from the window memory 2, and passes an image signal PO or an image signal 81a read from the frame memory 1 in the specified window area only.

An image edge detecting circuit 88 has the function of detecting the edge of an image, that is, the outermost points (the points on the outer circumference) and the innermost points (the points on the inner circumference) of the highlighted ring portion. The inputted image signal is converted to a binary representation according to a predetermined threshold used for detecting the position of a target image and testing the circularity, and the coordinates of the rise point and the fall point of the binary signal indicating the image edge are stored in the memory of the image edge detecting circuit. A circuit 89 tests the circularity of a test object according to the coordinates of the points on the outer or the inner circumference detected by the image edge detecting circuit 88.

A defect detecting circuit 90 receives through the window gate circuit 7 the image signal 81a read from the frame memory 1 by raster-scanning the image in the frame memory 1, and detects picture elements indicating black spots, etc. A defect detection determining circuit 91 sums the detected picture elements indicating a defect and determines whether a defect exists.

A defect detecting circuit 92 receives through the window gate circuit 7 the image signal 81a read from the frame memory 1 by circularly scanning the image in the frame memory 1, and detects a picture element indicating a defective concave. A defect detection determining circuit 93 sums up the picture elements indicating a defect and determines whether a defect exists. A circuit 99 receives the determination results from the circularity determining circuit 89 and the defect detection determining circuits 91 and 93, and obtains the overall determination, and an output circuit 100 outputs a positive or negative defect determination result according to the output determination signal from the overall determination circuit 99.

Next, an X projecting circuit 96 obtains an X-direction projection pattern for a target image using the latest multi-value signal PO passing through the window gate circuit 87. Likewise, a Y projecting circuit obtains a Y-direction projection pattern for a target image. A circuit 98 obtains the area of the test container image not adjacent to other container images according to the data outputted by the two projecting circuits 96 and 97.

That is, when a cylindrical container to be tested passes through a predetermined point, a static image of the test container can be captured from above the container using a strobe light or an exposure controlled by a shutter. During the capture operation, the image is transmitted to the X projecting circuit 96 and the Y projecting circuit 97 so as to extract the characteristics of the projected pattern. When a fixed binary image is projected, the projecting circuits 96 and 97 have the function of converting to the binary representation.

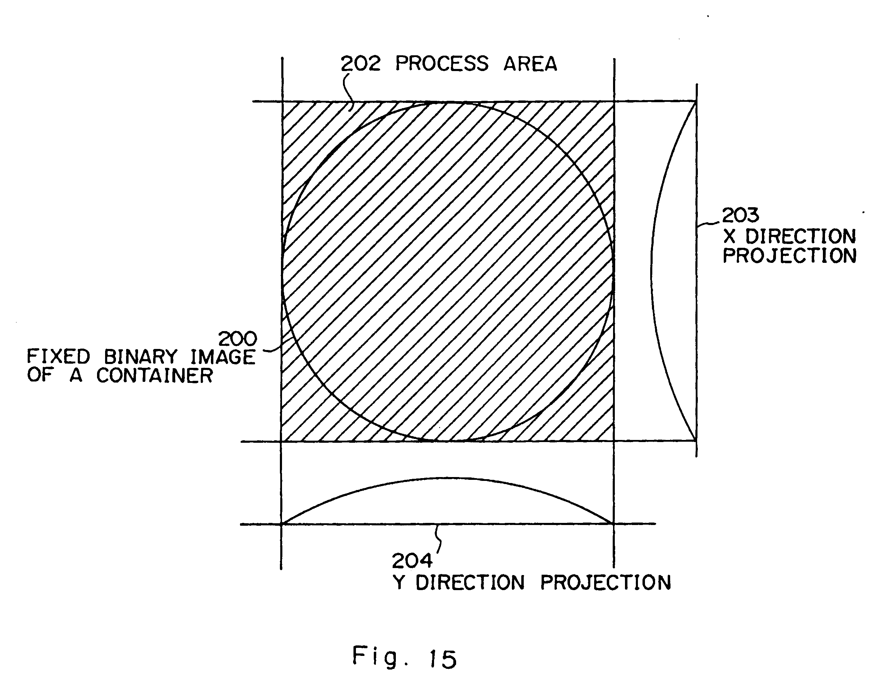

Figure 15 shows a method of detecting the bounding rectangle of the container (that is, the process area indicated by diagonal shaded according to the amount of the X-direction projection 203 and the Y-direction projection 204 using the fixed binary image 200 of the container. If containers are carried adjacently on a conveyor, the process area 202 in determined after a process area separation determination circuit 98 separates adjacent containers.

Next, an image edge detecting circuit 94 and a position error amount determining circuit 95 generate a window at the correct position relative to the target image.

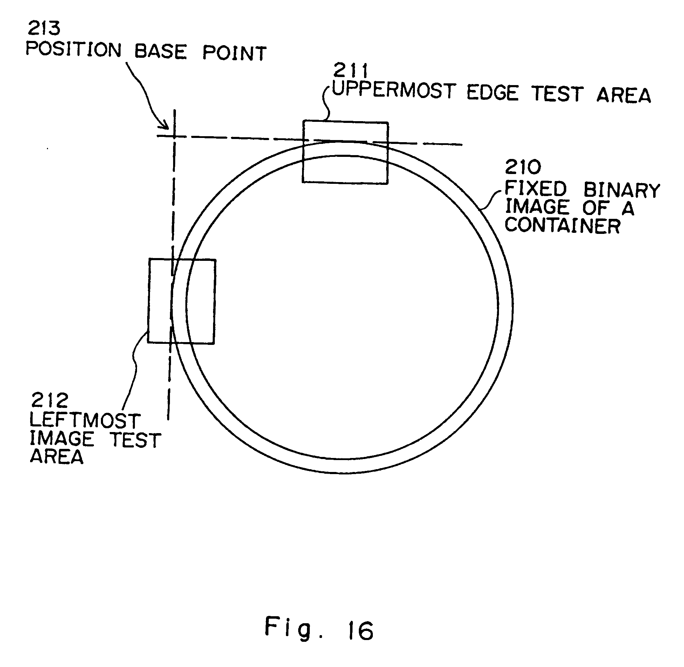

Figure 16 shows the operation of the image edge detecting circuit 94. The edge detecting circuit 94 receives the latest multi-value continuous tone image signal PO during the operation of the above described projecting circuits 96 and 97, and generates a fixed binary image 210 of a valley highlighted portion so that the center of the target image can be easily detected. However, the threshold used in this process is generally different from that used by the image edge detecting circuit 88.

Then, the coordinates of the edges in a predetermined area for the fixed binary image 210 (in this example, the uppermost edge in the uppermost edge test area 211 and the leftmost edge in the leftmost edge test area 212), that is, the coordinates of the position base point 213 are detected.

The position error amount determining circuit 95 compares the coordinates of the position base point 213 with predetermined base coordinates, and detects the difference between the center position of the currently detected target image and the center position of the predetermined window.

Each of the processes performed by the image edge detecting circuit 88, the defect detecting circuit 90, the image edge detecting circuit 94, the X projecting circuit 96, and the Y projecting circuit 97, but not by the defect detecting circuit 92, is performed using the raster address generators 83 and 85. Then, control is transferred to the circular address generators 84 and 86 to generate a circular address and operate the defect detecting circuit 92

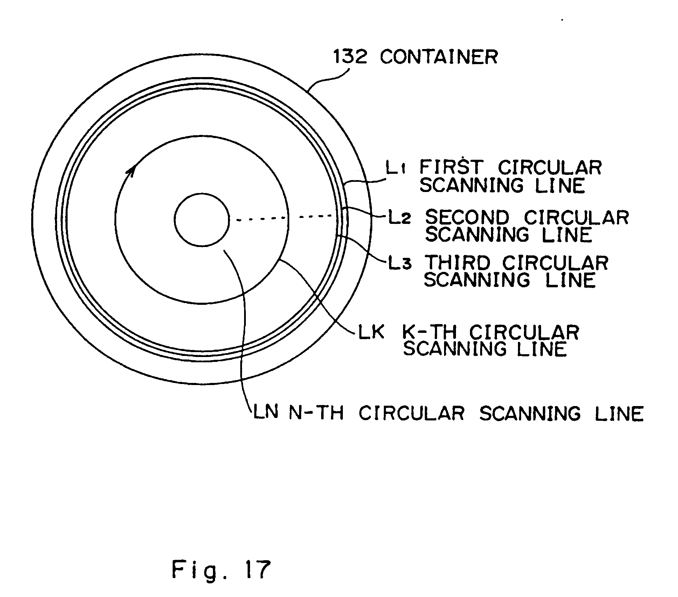

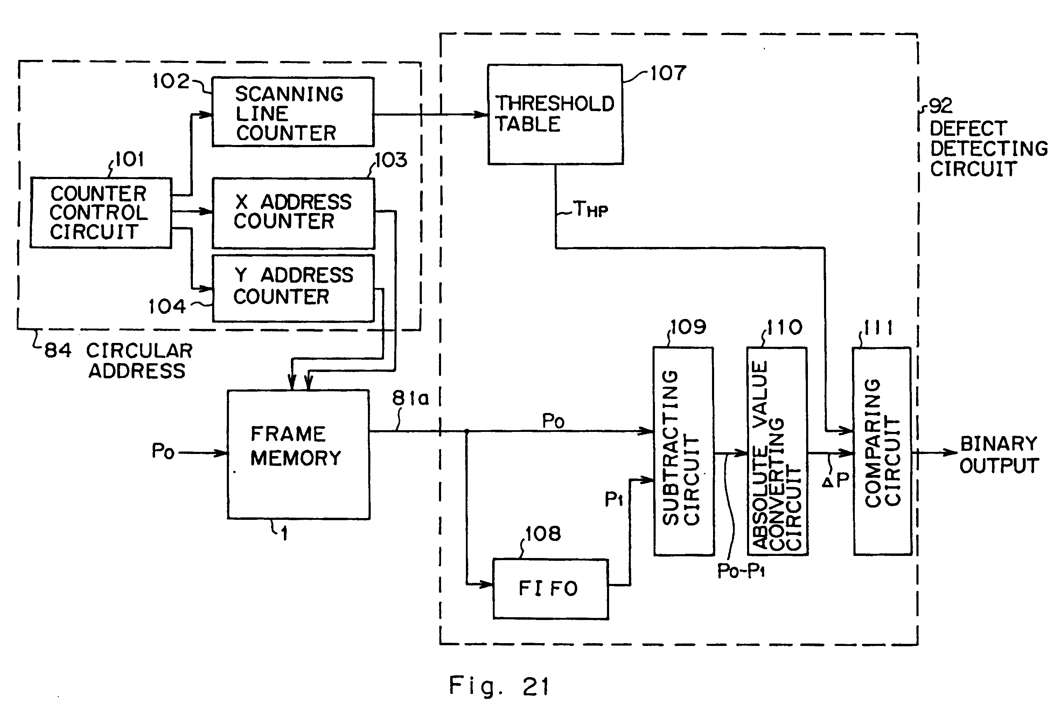

Figure 17 shows the method of generating a circular address. In this example, the concentric ring scanning lines (circular scanning lines) L (L1 - Ln) are generated for searching the side of the container 132, that is, the image area between the opening highlighted portion 133 and the valley highlighted portion 134 shown in Figure 2A, at intervals of one or more picture element (the interval is determined depending on the size of a defective concave to be detected). The image is circularly scanned clockwise and sequentially for each scanning line L from L1, L2, ... Lk, ... Ln with the scanning lines switched one after another. As described later in Figure 21, circular addresses are generated such that the X and Y coordinates of target picture elements arranged at every two or more picture elements are specified sequentially in the order of the scanning operation.

Instead of the above described concentric circular scanning lines, the circular scanning lines can be a spiral scanning line in which the scanning radius changes sequentially over each cycle (in this case, the radius gets smaller).

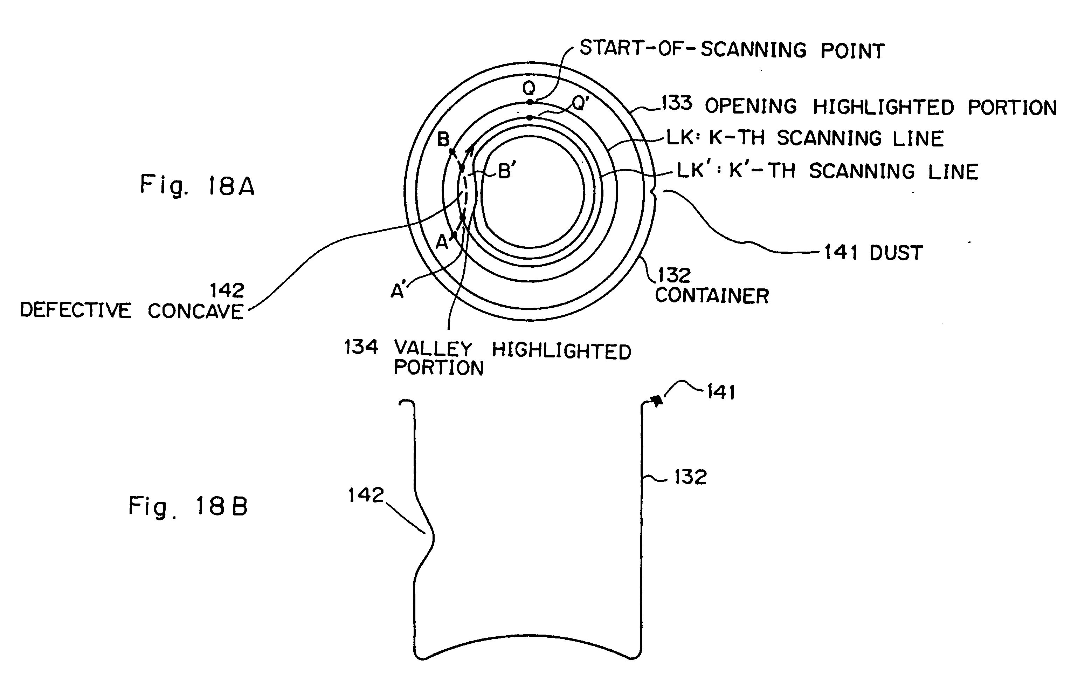

Figure 18A and 18B shows an example of a continuous tone image which indicates that the side of the container 132 shown in Figure 8B has a defective concave 142. In this case, a defective concave 142 exists between A and B on the k-th scanning line Lk, and between A' and B' on the scanning line Lk' of the circular scanning lines. Points Q and Q' indicate a start-of-scanning point on the circular scanning lines.

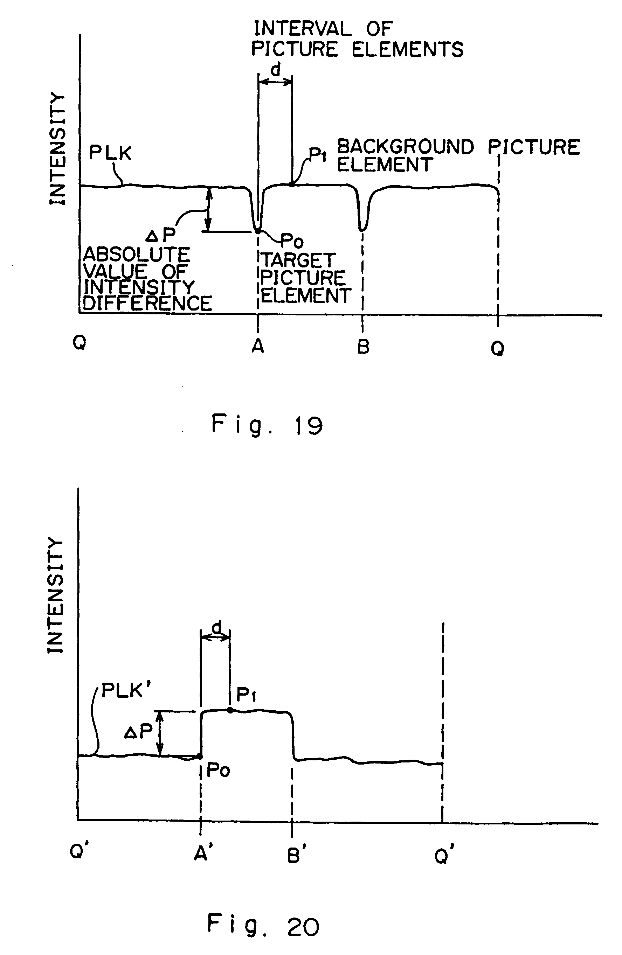

Figure 19 shows a view (1) for explaining the principle of the defect detecting circuit 92 of the circular method shown in Figure 14. PLk shown in Figure 19 shows an example of intensity variations of the image data on the k-th scanning line Lk. The characters Q, A, and B on the horizontal axis shown in Figure 19 correspond to the characters shown in Figure 18A. P0 indicates a target picture element and its value, and P1 indicates a background picture element and its value. The background picture element is a predetermined number d of picture elements away from the target picture element.

The defect detecting circuit 92 compares the threshold THP predetermined for the window containing the k-th scanning line Lk with the absolute value of the difference between the above described picture element values P0 and P1 calculated as follows.

$$\Delta P = \| P0 - P1 \|$$

If $\Delta P$ > THP, it is determined that the target picture element P0 indicates a defective inner surface such as a defective concave, etc.

Figure 20 shows a view (2) for explaining the principle of the defect detecting circuit 92. PLk' in Figure 20 shows an example of the intensity variations of the picture element data on the k'-th scanning line Lk'. The characters Q', A', and B' on the horizontal axis shown in Figure 20 correspond to the characters shown in Figure 18A. The k'-th scanning line Lk' shown in Figure 18A runs through the low intensity portion existing along the outside of the valley highlighted portion 134. If a defective concave exists on this portion, the defective concave is highlighted as shown in Figure 20, and the sign for the intensity difference P0 - P1 is inverted from that shown in Figure 19. However, as shown in Figure 19, the defect detecting circuit 92 shown in Figure 20 compares the threshold THP predetermined for the window containing the k'th scanning line Lk' with the absolute value of the difference in intensity variation obtained as follows.

$$\Delta P = \| P0 - P1 \|$$

If $\Delta P$ > THP, it is determined that the target picture element P0 indicates a defective inner surface such an a defective concave, etc.

Figure 21 is a block diagram of the configuration of the circular address generator 84 and the defect detecting circuit 92 shown in Figure 14. The counter control circuit 101 in the circular address generator 84 controls an X address counter 103 and a Y address counter 104 in the circular address generator 84 to sequentially output from the counters 103 and 104, to the frame memory 1, X and Y addresses as circular addresses of each target picture element in the order of scanning lines L1, L2, ..., Ln shown in Figure 12. The scanning counter 102 is provided in the circular address generator 84, and the value indicated by the counter 102 is incremented by 1 each time the test image is scanned along one circle.

In the defect detecting circuit 92, a continuous tone image signal (picture element value) 81a read according to the above described circular addresses from the frame memory 1 is sequentially inputted to a subtracting circuit 109 and a FIFO 108. The FIFO 108 delays the inputted image signal 81a by the number d (the above described interval of target picture elements).

Therefore, the subtracting circuit 109 receives the image signal 81a as a value P0 of the target picture element shown in Figure 9, receives a picture element value outputted by the FIFO 108 as a value P1 of the background picture element separates from the target picture element shown in Figure 19 by the number d (the above described interval of target picture elements), and obtains the difference between them (P0 - P1). The absolute value converting circuit 110 obtains the absolute value ($\| P0 - P1 \| = \Delta P$) of the difference P0 - P1.

The threshold table 107 in the defect detecting circuit 92 outputs a threshold THP according to the address outputted by the scanning line counter 102 (that is, the address for each of scanning lines L1, L2, ..., Ln). At this time, the threshold THP in a window can be set to the same value.

A comparing circuit 111 compares the above described absolute value $\Delta P$ of the difference in intensity with the threshold THP, and outputs a binary conversion signal as the determination of whether or not the target picture element indicates a defective concave, etc., according to whether or not $\Delta P$ > THP exists.

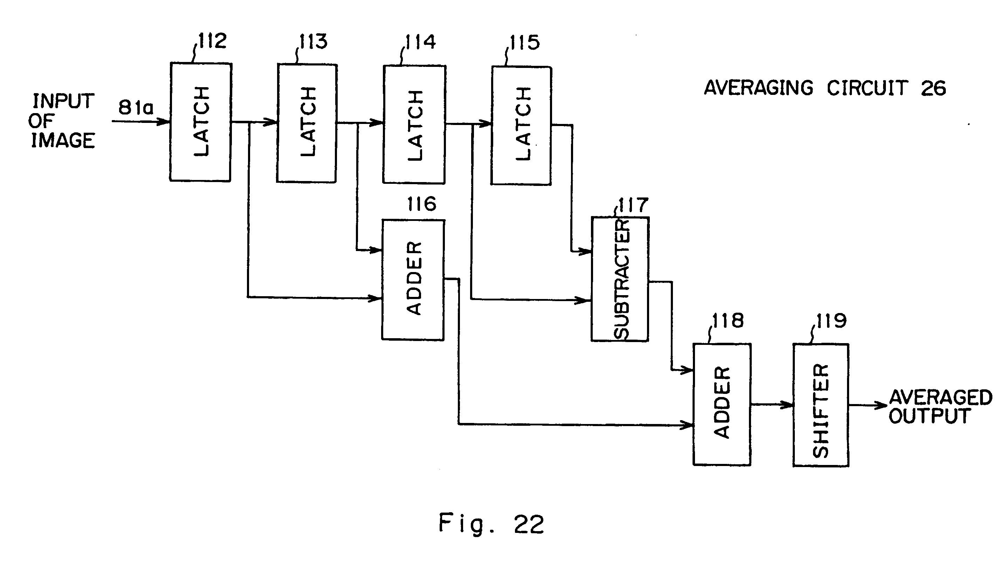

Figure 22 shows an example of the configuration of an averaging circuit 106 for applying a moving average to the picture element value P1 outputted by the FIFO 108 shown in Figure 21. The circuit 106 is provided in series with the FIFO 108 shown in Figure 21 (in this example, between the frame memory 1 and the FIFO 108). The averaging circuit 106 calculates the moving average of four picture elements sequentially inputted in series. When an inputted image signal (picture element value) 81a is transmitted to latches 112, 113, 114, and 115 sequentially in this circuit 106, the image data in latches 112 and 113 are added by an adder 116, and the image data in latches 114 and 115 are added by an adder 117. Then, the addition results are added by an adder 118, and thus, the sum of four picture element values is obtained. A shifter 119 calculates an averaged output by shifting the resultant sum by two bits to right (that is, the sum is divided by 4).

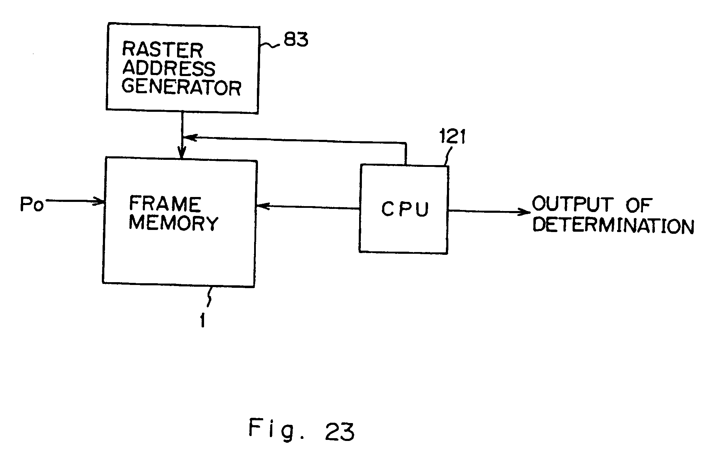

Figure 23 shows an example in which a CPU 121 replaces using software the functions of the circuit excluding the frame memory 1 and the raster address generator 83 shown in Figure 14. In this case, since the circular address generating circuits 84 and 86 operating an the hardware for accessing the frame memory 1 are not provided independently, it is supposed that the processing time of the CPU 121 in longer. Therefore, it is required that the processing time of the CPU 121 be shortened and the interval between circular scanning lines L should be appropriately extended, or the interval between target picture elements on the scanning line L should be extended.

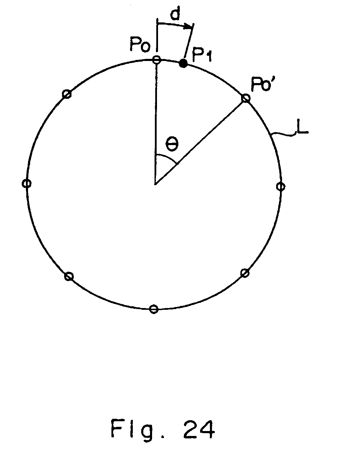

Figure 24 shows an example of shortening the processing time. First, the data of the target picture element P0 on the circular scanning line L are read. Then, the data of the background picture element P1 separated from P0 by the number d of picture elements are read. The absolute value of the intensity difference between the two picture elements is obtained ($\|P0 - P1\|$). Then, the absolute value of the intensity difference is compared with the predetermined threshold THP and the target picture element P0 is converted to the binary representation to determine whether or not the target picture element indicates a defect. If it does not indicate a defect, control is transferred to the next target picture element P0′ separated from the present one by $\theta$, and the above described process is performed on it. The scanning operation completes when all circular scanning lines are processed.

The defect detection determining circuit 93 determines such that the number of picture elements indicating a defect is accumulated over one or more circular scanning lines, the number is compared with a predetermined area threshold, and then it is determined whether or not the inner surface of the test container has a defect.

The average intensity of the picture elements forming a predetermined two-dimensional local area (for example, an area of 3 picture elements x 3 picture elements) centered on the background picture element P1 can replace the average intensity of a predetermined number of picture elements (a one-dimensional local area) arranged on the circular scanning line L centered on the background picture element P1 shown in Figure 22.

## Claims

1. A cylindrical container inner surface tester for determining a black or white spot inside a cylindrical container by illuminating from above in the axis direction of said container the inner surface of said axis-symmetrical cylindrical container, capturing through a TV camera the illuminated area of said cylindrical container from above in the axis direction, and analyzing said captured image, comprising:

   a frame memory (1) for storing as the data of said captured image a multi-value continuous tone image signal (1a) A/D-converted from a continuous tone image signal obtained by scanning said captured image, and

   an area detecting unit (21) for generating a binary image signal by binary-converting using a predetermined threshold (THG) a multi-value continuous tone image signal read by horizontally or vertically scanning the frame memory (1) and for determining as a test area the area between the first rise point (61) and the last fall point (62) of each scanning line of said binary image signal.

2. The cylindrical container inner surface tester according to Claim 1, wherein

   an area having a different optical characteristic in the area-to-be-tested detected by said area detecting unit (21) is masked by a masking unit with predetermined mask pattern data (201).

3. A cylindrical container inner surface tester for determining defective concave or dust inside a cylindrical container by illuminating from above in the axis direction of a container the inner surface of said axis-symmetrical cylindrical container, capturing through a TV camera the illuminated area of said cylindrical container from above in the axis direction, and analyzing said captured image, wherein

   the image of the inner surface of said cylindrical container (132) is scanned along a ring or spiral scanning line (hereinafter referred to as a circular scanning line) which is centered on the center of the image and varies in radius sequentially, the radius changing for each cycle of one or more picture elements predetermined, and then the absolute value indicating the difference between the intensity of a target picture element, among a plurality of picture elements, arranged at intervals such that one or more picture elements are arranged between two target picture elements, and the intensity of a background picture element located a predetermined number of a plurality of picture elements forward or backward of the target picture element is compared with a threshold predetermined according to the position of the circular scanning line, and

   said process is repeated for each target picture element, and, after said above process, a determining unit (84, 92, etc.) determines a defective container's inner surface when said absolute value larger than said threshold.

4. The cylindrical container inner surface tester according to Claim 3, wherein

   said threshold is set per cycle of said circular scanning line.

5. The cylindrical container inner surface tester according to Claim 3, wherein

   The intensity of said background picture element equals the average intensity of the picture elements in a predetermined one- or two-dimensional local area centered on said background picture element.

Fig. 1A

132
CONTAINER

133
OPENING
HIGHLIGHTED
PORTION

131 RING-SHAPED
ILLUMINATOR

134

VALLEY
HIGHLIGHTED
PORTION

133

132

Fig. 1B

134

Fig. 2A

132

Q ——————— Q1

134

133

Fig. 2B

134

133

Q ——————— Q1

W1    W2 W3    W5    W4   W2 W1
                     W4          W3
WINDOW

Fig. 3

Fig. 4A

Fig. 4B

Fig. 4C

VALLEY
HIGHLIGHTED
PORTION 134

Fig. 5A

134-2

134-1

133

133

132

Fig. 5B

134-2

134-1

132a
PROJECTING
PORTION

MULTI-VALUE
CONTINOUS TONE
IMAGE SIGNAL

Fig. 6A

PO(x,j)

53 BACKWARD BACKGROUND POINT IN A NON-DEFECTIVE PORTION
51 TARGET POINT IN A NON-DEFECTIVE PORTION
52 FORWARD BACKGROUND POINT IN A NON-DEFECTIVE PORTION
56 BACKWARD BACKGROUND POINT IN A DEFECTIVE PORTION
54 TARGET POINT IN A DEFECTIVE PORTION,
   PICTURE ELEMENT VALUE
55 FORWARD BACKGROUND POINT IN A DEFECTIVE PORTION,
   PICTURE ELEMENT
   VALUE

$Q$     $\alpha$ $\alpha$     $\alpha$  $\alpha$     $Q1$

$x = i$

PEAK / VALLEY
BINARY-CONVERSION SIGNAL

Fig. 6B

POD(x,j)

THRESHOLD
THD

$Q$     $Q1$

EP 0 540 018 A2

Fig. 7

Fig. 8A

Fig. 8B

Fig. 8C

Fig. 9

Z1: UPPER CIRCLE ARER

132: CONTAINER

133: OPENING
HIGHLIGHTED
PORTION

LEFT CIRCLE
AREA
Z3

Z4: RIGHT CIRCLE
AREA

134: VALLEY
HIGHLIGHTED
PORTION

WB: WINDOW

45°

AR
SCANNING
DIRECTION

Z2: LOWER CIRCLE AREA

Fig. 10 A

Fig. 10 B

HF: HIGH FREQUENCY RANGE

Fig. 10 C

AREA
Za

132

133

AREA
Zb

134

AR

AREA
Zc

WB

Fig. 11

132

133

134

AR

WB

Fig. 12

DEFECTIVE PORTIONS

71    72

133

132

QA —————————————————— QA1

ILLUMINANCE
MEASURING
CIRCUIT

74

134

QB ———————————————————— QB1

DEFECTIVE PORTION 73

Fig. 13 A

71    72

QA —————————————————— QA1

Fig. 13 B

BLACK LEVEL
THRESHOLD THB

73

QB ———————————————————— QB1

SET AMOUNT α

Fig. 13 C

Fig. 14

203
X DIRECTION
PROJECTION

Y DIRECTION PROJECTION

202 PROCESS AREA

204
Y DIRECTION
PROJECTION

200
FIXED BINARY IMAGE
OF A CONTAINER

Fig. 15

213
POSITION BASE POINT

211
UPPERMOST EDGE TEST AREA

210
FIXED BINARY IMAGE OF A CONTAINER

212
LEFTMOST IMAGE TEST AREA

Fig. 16

132 CONTAINER

L1 FIRST CIRCULAR SCANNING LINE

L2 SECOND CIRCULAR SCANNING LINE

L3 THIRD CIRCULAR SCANNING LINE

LK K-TH CIRCULAR SCANNING LINE

LN N-TH CIRCULAR SCANNING LINE

Fig. 17

START-OF-SCANNING POINT

133 OPENING HIGHLIGHTED PORTION

LK: K-TH SCANNING LINE

LK': K'-TH SCANNING LINE

141 DUST

132 CONTAINER

Fig. 18A

142 DEFECTIVE CONCAVE

134 VALLEY HIGHLIGHTED PORTION

141

132

142

Fig. 18 B

EP 0 540 018 A2

INTERVAL OF
PICTURE ELEMENTS

INTENSITY

PLK

BACKGROUND PICTURE
ELEMENT

P1

ΔP
ABSOLUTE
VALUE OF
INTENSITY
DIFFERENCE

Po
TARGET
PICTURE
ELEMENT

Q          A          B          Q

Fig. 19

INTENSITY

PLK'

P1

ΔP

Po

Q'          A'          B'          Q'

Fig. 20

Fig. 21

EP 0 540 018 A2

AVERAGING CIRCUIT 26

INPUT OF IMAGE

81a

LATCH 112

LATCH 113

LATCH 114

LATCH 115

ADDER 116

SUBTRACTER 117

ADDER 118

SHIFTER 119

AVERAGED OUTPUT

Fig. 22

RASTER ADDRESS GENERATOR ~83

121

Po → FRAME MEMORY ← CPU → OUTPUT OF DETERMINATION

1

Fig. 23

Fig. 24